# EUROPEAN PATENT SPECIFICATION

(11) **EP 2 117 188 B1**
(45) Date of publication and mention of the grant of the patent: **01.07.2020**
(21) Application number: 08008730.7
(22) Date of filing: 09.05.2008
(51) Int. Cl.: H04L 12/58, H04L 29/08

(54) **Method and device for managing communication items**
Verfahren und Vorrichtung zum Verwalten von Kommunikationspunkten
Procédé et dispositif pour la gestion d'éléments de communications

(43) Date of publication of application: 11.11.2009
(73) Proprietor: Vodafone Holding GmbH, 40213 Düsseldorf (DE)
(72) Inventor: Aramu, Daniela, 40211 Düsseldorf (DE); German, Leon, 40219 Düsseldorf (DE)
(74) Representative: Jostarndt Patentanwalts-AG

(56) References cited:
- EP-A- 1 763 186
- US-A1- 2004 137 884
- US-A1- 2004 137 955
- US-B1- 6 661 877

## Description

### Technical field

The present invention relates to a method and a device for managing communication items. In particular the present invention relates to a method according to claim 1 and to a system according to claim 13.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

In a conventional communication devices such as wireless mobile phones the interfaces for the user to operate the device are usually menu driven. Starting from a top-menu he has to click through a number of sub-menus such as received calls, missed calls, emails, SMS-messages, voice messages etc. to check whether he has received new messages. With this conventional kind of interfaces the user has to navigate through a number of menus and sub-menus due to the variety of communication services available and the different types of messages he has received.

From US 2004/0137884 a mobile communication device such as wireless mobile phone is known. The known device is provided with a unified message function equipped to facilitate a user in interacting with a communication partner including messages of different message types supported by the mobile communication device via an unified thread. The received messages are stored in a physical memory in the mobile communication device.

US 2004/0137955 A1 discloses a unified message box for wireless mobile communication devices. The mobile communication device is integrated into communication networks. Terminal devices are connected to the communication networks and communicate with the mobile communication device with messages of different formats such as voice mails, telephone calls, text messages, e-mails and any other type of format. The different types of messages are compiled in a unified message box and are shown on the display of the mobile communication device. The messages are stored either on the mobile communication device or on any other physical location.

US 6,661,877 discloses a system and a method for providing access to a unified message store. The unified message store stores different kinds of messages such as e-mail, facsimiles, voice mail and video mail. The system providing access to the unified message store comprises a unified messaging server. The user can get access to the unified message store via different types of physical user devices. The user devices connect to the unified messaging server via wired or wireless networks including public switched telephone networks and the Internet. Consequently, the different types of messages are not stored in the different devices but on the unified message store.

EP 1 763 186 A1 discloses a method and an apparatus for interfacing communication messages. The user interface displays the menu comprising at least one selectable object for each message type received. The user interface displays the message associated with the selectable object for each type of message received. Each selectable object comprises the label identifying the message type. Upon user interaction the user interface generates a corresponding communication action.

The present invention proposes another approach to improve the operability of mobile communication devices for the user.

### Summary of the invention

According to a first aspect the present invention suggests a method for managing communication items. The method comprises the following steps:
- Receiving communication items;
- storing of communication items on a server;
- creating a log-file on the server;
- transmitting the log-file to a mobile communication device; and
- linking other information stored on the server with the selected communication item.

According to an advantageous embodiment of the invention the method further comprises the step of displaying a graphical representation of the log-file on a screen of the mobile communication device.

Advantageously the method further comprises the step of extracting the message type from the log-file.

In the preferred embodiment the method further comprises the step of assigning a predetermined symbol for each type of message. In this case the method may further comprise the step of switching the symbol between at least two different states. In this way it is easier for the user to navigate through the log-file.

In a useful embodiment the method further comprises the step of selecting communication items from the log-file. Advantageously the method further comprises the step of downloading the selected communication item from the server. In this case it is useful if the method further comprises the step of expanding and/or playing back the downloaded communication item.

In a practical embodiment the method further comprises, the step of deleting the selected communication item from the log-file as well as from the server.

Similarly it is practical if the method further comprises the step of responding to the selected communication item. In this case it may be useful if the method further comprises the step of selecting the type of message for responding to the selected message.

The method comprises the step of linking documents stored on the server with the selected communication item. This is a very useful if the user wants to combine several communication items he has already received.

For technical reasons it is advantageous to link documents stored on the server with the selected communication item.

For the transmission several approaches have been found to be useful. The method may therefore comprise the step of transmitting the log-file to the mobile communication device upon request, triggered by a timer and/or permanently.

According to a second aspect of the present invention the device is suggested which comprises processing means provided for executing the method according to one or several of the preceding claims.

### Brief description of the drawings

Figure 1 is a schematic illustration of a communication environment;
figure 2 is a schematic illustration of a specific aspect of the present invention; and
figure 3 is an exemplary presentation of communication items according to the present invention.

### Detailed description of the embodiments of the invention

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims. One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below.

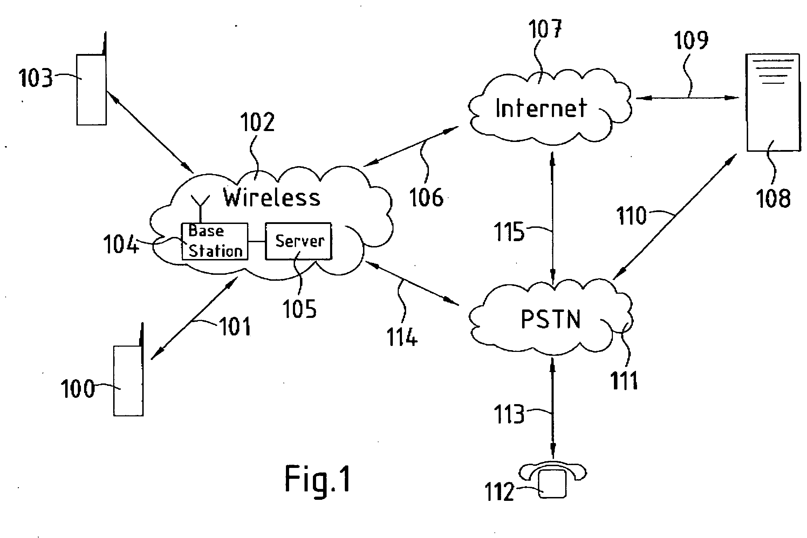

Figure 1 schematically illustrates a communication environment comprising a plurality of networks and devices connected to one or several networks. A communication device 100'of a user is connected via a connection 101 to a wireless network 102. In an exemplary embodiment of the invention, the communication device 100 is a wireless mobile phone, Further wireless communication devices 103 of other users are also connected to the wireless network 102. The wireless network 102 comprises a base station 104 and a server 105. This is conventional technology and not part of the present invention.

The mobile communication device 100 may be cellular phone, a personal digital assistant (PDA) or the like and is registered in a mobile communication network 102. The mobile communication network 102 is e.g. a public land mobile network (PLMN). The mobile communication network 102 e.g. configured according to the GSM standard or the UMTS standard (UMTS; Universal Mobile Telecommunication System) and comprises a circuit switched domain and a packet switched domain. The mobile communication device 100 accesses the PLMN 102 network wirelessly via a radio access network, which maybe configured according to a radio access technology known to a person skilled in the art. In an exemplary embodiment of the present invention the radio access network is configured as GERAM (GSMEDGE radio access network) or UTRAM (UMTS terrestrial radio access network).

The wireless network 102 is connected via a high data rate connection 106 with the internet 107. Computer devices 108 are connected by via DSL-connections 109 with the internet 107. For the sake of simplicity only one computer 108 is shown in figure 1. The shown computer device 108 is also provided with a modem to establish a connection 110 with a public switched telephone network (PSTN) 111, Finally, a telephone 112 is connected via a telephone line 113 with the public switched telephone network 111. The communication environment is completed with high data rate connections 114, 115 between the public switched telephone network 111 on the one side and the wireless network 102 and the internet 107 on the other side. As it is illustrated in figure 1 every communication device is interconnected with any other communication device shown in figure 1 providing a large variety of different types of communication between the different devices. In particular different types of messages can be received on the communication device 100 of the user including conventional voice calls, voice messages, emails, SMS-messages and instant messaging messages. We will refer to the entire group of different types of messages as communication items.

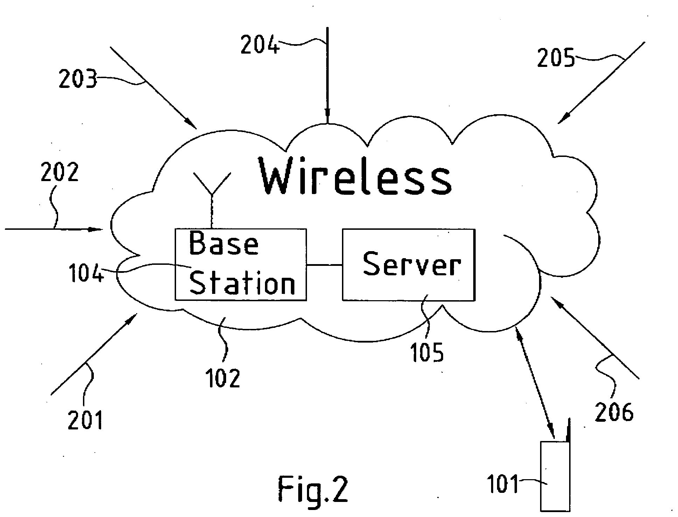

Figure 2 shows a portion of figure 1 emphasising the fact that different kinds of messages are received by the communication device 100 of the user. The different types of messages are symbolized in figure 1 with arrows 202 to 206. The server 105 of the wireless network provider aggregates information and/or communication items from a plurality of other servers which are connected with the server 105 as mentioned with regard to figure 1.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a communication item is just a data item.

In a conventional communication devices such as wireless mobile phones the interfaces for the user to operate the device are usually menu driven. Starting from a top-menu he has to click through a number of sub-menus such as received calls, missed calls, emails, SMS-messages, voice messages etc. to check whether he has received new messages. This is a cumbersome task especially for busy people who receive many kinds of communication items through different channels. This is for example the case when this person switches on his communication device after a long flight while he may have received a large number of different messages. With this conventional kind of interfaces the user has to navigate through a number of menus and sub-menus due to the variety of communication services available and the different types of messages he has received.

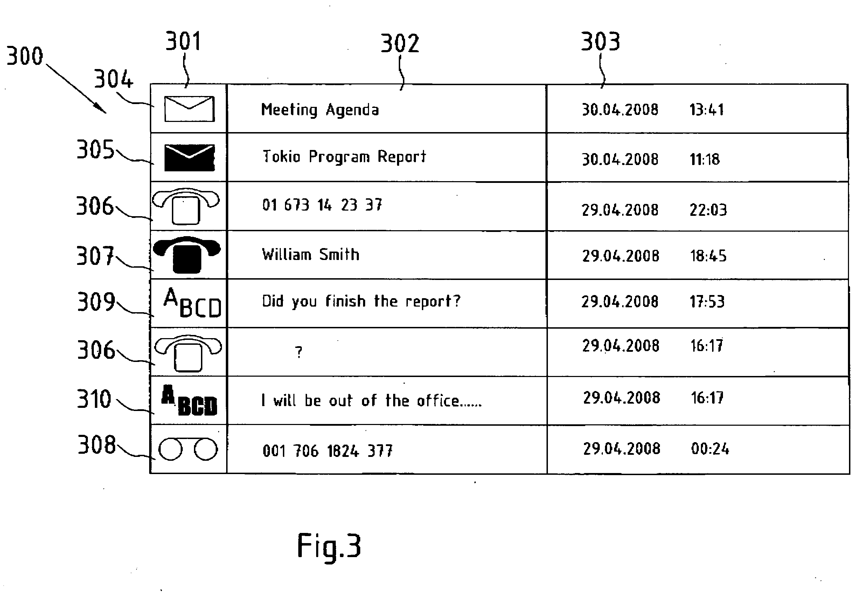

In figure 3 a graphical representation of the log-file of all received communication items is shown. The graphical representation is basically a table 300 having a column 301 containing different kinds of icons to indicate what kind of message has been received. A second column 302 provides additional information such as a subject of an email, a telephone number or a name, if the communication partner is already known. Furthermore, text messages are directly displayed. Finally the table 300 contains a column 303 indicating data and time when the respective message has been received. The first two lines shown in table 300 contain email messages which are indicated by an envelope in column 301. The envelope 304 is shown in light lines because the associated email has already been read by the user. In contrast to that the envelope 305 is shown in dark because the user has not yet read the associated email address. Similarly the same concept of light and dark symbols is also applied to telephone calls which have been received. If a telephone call has been taken the log-file shown in table 300 shows a telephone 306 in light lines while a call which has not been taken is symbolized with a telephone symbol 307 in dark lines. Recorded voice messages are indicated by a recording symbol 308. Finally the log-file also contains text messages which get light symbol 309 if the text message was read by the user and dark symbol 310, if the text message has not yet been read by the user. It is noted that unknown senders or callers are listed in the column 302 with a question mark as it is shown in a six line from the top in table 300.

If the user wants to access a specific communication item shown in table 300 he moves a cursor in form of a highlighted line along the table 300 and enters a select command. The select command triggers a transmission of call-up command from the communication device 100 of the user to the server 105 of the wireless network operator. This call-up command entails the transmission of the selected communication item from the server to the mobile communication device. In case of an email message the email becomes visible on a screen of the mobile communication device. In case of a voice message the audio file is transferred from the server to the mobile communication device and the audio file is then played back in the mobile communication device and becomes audible for the user. At the same time the log-file on the server 105 is updated and the updated log-file is transmitted to the mobile communication device 100.

In one embodiment of the present invention it is possible to link documents stored on the server 105 with a communication item. In this way the user has an easy access to documents which are relevant for the communication item.

It is an important the future of the present invention that the files of the communication items are stored on the server 105 of the network provider and only the log file is transmitted to the mobile communication device 100. This is particularly advantageous for mobile devices having limitations with regard to the size of the available memory as well as their energy consumption because storing a link and downloading a file is less energy consuming than downloading a potentially big file associated with the communication item. In particular during travels it is inconvenient for users if their communication device is running out of energy and becomes inoperative. In the same way it is disturbing for a user if his communication device runs out of memory.

At the same time also the security for the user is increased. If his mobile communication device gets lost or damaged all information is still available on the server 105 of the network provider.

### List of reference numerals:

- 100: communication device
- 101: connection to wireless network
- 102: wireless network
- 103: further wireless communication devices
- 104: base station
- 105: server
- 106: high data rate connection
- 107: internet
- 108: computer devices
- 109: DSL-connections
- 110: connection
- 111: public switched telephone network
- 112: telephone
- 113: telephone line
- 114: data rate connection
- 115: data rate connection
- 300: table
- 301: column
- 302: second column
- 303: column
- 304: envelope shown in light lines
- 305: envelope shown in dark
- 306: light telephone symbol
- 307: dark telephone symbol
- 308: recording symbol
- 309: light symbol for text messages
- 310: dark symbol for text messages

## Claims

1. Method for managing communication items, wherein the method comprises the following steps:
- receiving communication items;
- storing of communication items on a server (105);
- creating a log-file;
- transmitting the log-file to a mobile communication device (100);
- linking a plurality of documents relevant for a selected communication item and stored on the server (105) with the selected
communication item.

2. Method according to claim 1, wherein the method further comprises the step of displaying a graphical representation of the log-file on a screen of the mobile communication device (100).

3. Method according to claim 1, wherein the method further comprises the step of extracting the message type from the log-file.

4. Method according to claim 3, wherein the method further comprises the step of assigning a predetermined symbol (304 to 310) for each type of message.

5. Method according to claim 4, wherein the method further comprises the step of switching the symbol (304 to 310) between at least two different states.

6. Method according to claim 1, wherein the method further comprises the step of selecting communication items from the log-file.

7. Method according to claim 6, wherein the method further comprises the step of downloading the selected communication item from the server (105).

8. Method according to claim 7, wherein the method further comprises the step of expanding and/or playing back the downloaded communication item.

9. Method according to claim 6, wherein the method further comprises, the step of deleting the selected communication item from the log-file as well as from the server (105).

10. Method according to claim 6, wherein the method further comprises, the step of responding to the selected communication item.

11. Method according to claim 10, wherein the method further comprises, the step of selecting the type of message for responding to the selected message.

12. Method according to claim 1, wherein the method further comprises, the step of transmitting the log-file to the mobile communication device (100) upon request, triggered by a timer and/or permanently.

13. Communication system comprising a mobile communication device and a server comprising processing means provided for executing the method according to one or several of the preceding claims.

## Patentansprüche

1. Verfahren zum Verwalten von Kommunikationselementen, wobei das Verfahren die folgenden Schritte umfasst:
- Empfangen der Kommunikationselemente,
- Speichern der Kommunikationselemente auf einem Server (105),
- Anlegen einer Logdatei,
- Übertragen der Logdatei zu einer mobilen Kommunikationsvorrichtung (100),
- Verknüpfen einer Vielzahl von Dokumenten, die für ein ausgewähltes Kommunikationselement relevant und auf dem Server (105) gespeichert sind, mit dem ausgewählten Kommunikationselement.

2. Verfahren nach Anspruch 1, wobei das Verfahren ferner den Schritt des Anzeigens einer grafischen Darstellung der Logdatei auf einem Bildschirm der mobilen Kommunikationsvorrichtung (100) umfasst.

3. Verfahren nach Anspruch 1, wobei das Verfahren ferner den Schritt des Extrahierens des Nachrichtentyps aus der Logdatei umfasst.

4. Verfahren nach Anspruch 3, wobei das Verfahren ferner den Schritt des Zuordnens eines vorgegebenen Symbols (304 bis 310) für jeden Nachrichtentyp umfasst.

5. Verfahren nach Anspruch 4, wobei das Verfahren ferner den Schritt des Umschaltens des Symbols (304 bis 310) zwischen wenigstens zwei unterschiedlichen Zuständen umfasst.

6. Verfahren nach Anspruch 1, wobei das Verfahren ferner den Schritt des Auswählens von Kommunikationselementen aus der Logdatei umfasst.

7. Verfahren nach Anspruch 6, wobei das Verfahren ferner den Schritt des Herunterladens des ausgewählten Kommunikationselements von dem Server (105) umfasst.

8. Verfahren nach Anspruch 7, wobei das Verfahren ferner den Schritt des Aufklappens und/oder Abspielens des heruntergeladenen Kommunikationselements umfasst.

9. Verfahren nach Anspruch 6, wobei das Verfahren ferner den Schritt des Löschens des ausgewählten Kommunikationselements aus der Logdatei sowie von dem Server (105) umfasst.

10. Verfahren nach Anspruch 6, wobei das Verfahren ferner den Schritt des Antwortens auf das ausgewählte Kommunikationselement umfasst.

11. Verfahren nach Anspruch 10, wobei das Verfahren ferner den Schritt des Auswählens des Nachrichtentyps zum Antworten auf die ausgewählte Nachricht umfasst.

12. Verfahren nach Anspruch 1, wobei das Verfahren ferner den Schritt des Übertragens der Logdatei zu der mobilen Kommunikationsvorrichtung (100) bei Bedarf umfasst, ausgelöst durch einen Zeitgeber und/oder dauerhaft.

13. Kommunikationssystem, umfassend eine mobile Kommunikationsvorrichtung und einen Server, der Verarbeitungsmittel umfasst, die dazu bereitgestellt sind, das Verfahren nach einem oder mehreren der vorhergehenden Ansprüche durchzuführen.

## Revendications

1. Méthode pour la gestion d'éléments de communication, la méthode comprenant les étapes suivantes :
- réception d'éléments de communication
- stockage d'éléments de communication sur un serveur (105)
- création d'un fichier journal
- transmission du fichier journal à un appareil de communication mobile (100)
- liaison d'une pluralité de documents pertinents pour un élément de communication sélectionné et mémorisés sur le serveur (105) avec l'élément de communication sélectionné.

2. Méthode conformément à la revendication n°1, la méthode comprenant en plus l'étape d'affichage d'une représentation graphique du fichier journal sur un écran de l'appareil de communication mobile (100).

3. Méthode conformément à la revendication n°1, la méthode comprenant en plus l'étape d'extraction du type de message du fichier journal.

4. Méthode conformément à la revendication n°3, la méthode comprenant en plus l'étape d'affectation d'un symbole prédéterminé (304 à 310) pour chaque type de message.

5. Méthode conformément à la revendication n°4, la méthode comprenant en plus l'étape de changement du symbole (304 à 310) entre au moins deux états différents.

6. Méthode conformément à la revendication n°1, la méthode comprenant en plus l'étape de sélection d'éléments de communication du fichier journal.

7. Méthode conformément à la revendication n°6, la méthode comprenant en plus l'étape de téléchargement de l'élément de communication sélectionné du serveur (105).

8. Méthode conformément à la revendication n°7, la méthode comprenant en plus l'étape d'élargissement et/ou de reproduction de l'élément de communication téléchargé.

9. Méthode conformément à la revendication n°6, la méthode comprenant en plus l'étape d'effacement de l'élément de communication sélectionné dans le fichier journal ainsi que sur le serveur (105).

10. Méthode conformément à la revendication n°6, la méthode comprenant en plus l'étape de réponse à l'élément de communication sélectionné.

11. Méthode conformément à la revendication n°10, la méthode comprenant en plus l'étape de sélection du type de message en réponse au message sélectionné.

12. Méthode conformément à la revendication n°1, la méthode comprenant en plus l'étape de transmission du ficher journal à l'appareil de communication mobile (100) sur demande, déclenchée par une minuterie et/ou en permanence.

13. Système de communication comprenant un appareil de communication mobile et un serveur comprenant un moyen de traitement fourni pour l'exécution de la méthode conformément à une ou plusieurs des revendications précédentes.
